# EUROPEAN PATENT APPLICATION

(11) **EP 4 752 959 A1**
(43) Date of publication of application: **03.06.2026**
(21) Application number: 25219599.5
(22) Date of filing: 29.11.2025
(51) Int. Cl.: H01M 4/133, H01M 4/134, H01M 4/36, H01M 4/38, H01M 4/587, H01M 4/62, H01M 10/0525

(54) **BINDER FOR NEGATIVE ELECTRDODE OF RECHARGEABLE LITHIUM BATTERY, NEGATIVE ELECTRODE FOR RECHAREABLE LITHIUM BATTERY INCLUDING SAME, AND RECHARGEABLE LITHIUM BATTERY INCLUDING SAME**

(30) Priority: 29.11.2024 KR 20240175747; 28.11.2025 KR 20250184867
(71) Applicant: SAMSUNG SDI CO., LTD., Yongin-si, Gyeonggi-do 17084 (KR)
(72) Inventor: Han, Imkyung, 17084 Yongin-si, Gyeonggi-do (KR)
(74) Representative: Meissner Bolte Partnerschaft mbB

(57) **Abstract**

Disclosed are a binder for a negative electrode of a rechargeable lithium battery, a negative electrode including the binder, and a rechargeable lithium battery including the binder.

## Description

### BACKGROUND

### (a) Field

The present invention relates to a binder for a negative electrode of a rechargeable lithium battery, a negative electrode for a rechargeable lithium battery including the binder, and a rechargeable lithium battery including the binder.

### (b) Description of the Related Art

With increasing use of electronic devices that use batteries such as, e.g., mobile phones, laptop computers, and electric vehicles, the demand for high-energy density and high-capacity rechargeable batteries is increasing. Thus, improving performances of rechargeable lithium batteries may be advantageous.

Rechargeable lithium batteries include a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes.

### SUMMARY

The present invention concerns a binder for a negative electrode of a rechargeable lithium battery that is capable of reducing or suppressing volume expansion of the negative electrode.

The present invention is further directed to a negative electrode for a rechargeable lithium battery including the binder.

The present invention is further directed to a rechargeable lithium battery including the negative electrode and/or the binder.

The present invention is directed to a binder for a negative electrode of a rechargeable lithium battery, the binder being represented by Chemical Formula 1 below. 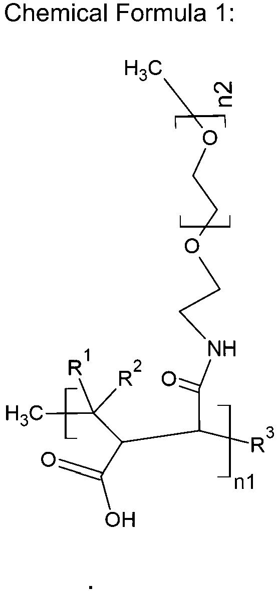
R¹ and R² are the same or different, and are hydrogen or a substituted or unsubstituted alkyl group;
R³ is or includes a substituted or unsubstituted alkyl group,
n1 is an integer in a range of about 50 to about 180, and
n2 is an integer in a range of about 5 to about 20.

The present invention is further directed to a negative electrode for a rechargeable lithium battery having a negative electrode active material layer that includes the binder and a negative electrode active material.

The present invention is further directed to a rechargeable lithium battery having a negative electrode that includes a negative electrode active material layer including the binder and a negative electrode active material; a positive electrode; and a non-aqueous electrolyte.

The binder for a negative electrode of a rechargeable lithium battery may provide a battery exhibiting desired or improved cycle-life and improved high-rate characteristics.

### BRIEF DESCRIPTION OF THE DRAWINGS

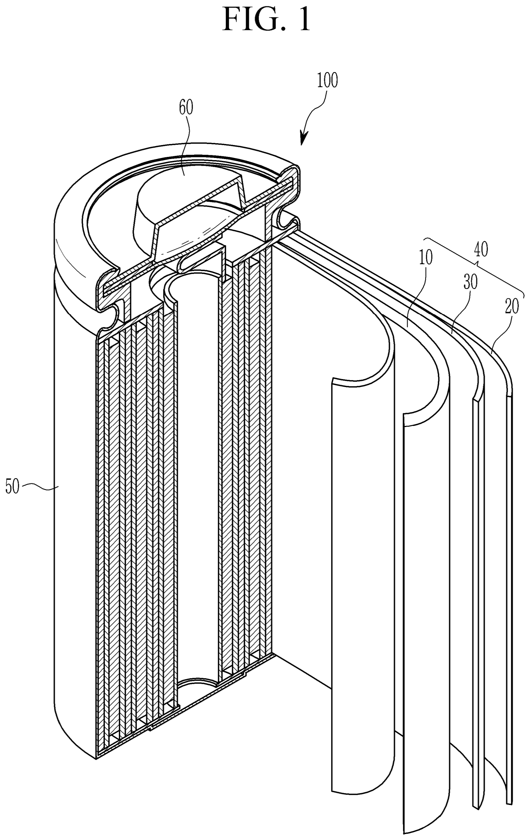

FIG. 1 to FIG. 4 are a cross-sectional view schematically illustrating rechargeable lithium batteries according to some example embodiments.

### DETAILED DESCRIPTION

Hereinafter, example embodiments are described in detail. However, these embodiments are examples, the present disclosure is not limited thereto, and the present disclosure is defined by the scope of claims.

As used herein, when a specific definition is not otherwise provided, it is understood that when an element such as a layer, film, region, or substrate is referred to as being "on" another element, the element may be directly on the other element, or intervening elements may also be present therebetween.

Unless otherwise specified in this specification, what is indicated in the singular may also include the plural. In addition, unless otherwise specified, "A or B" may mean "including A, including B, or including A and B."

As used herein, "the term "combination thereof" may include a mixture, a laminate, a complex, a copolymer, an alloy, a blend, a reactant of constituents.

In the present disclosure, when a definition is not otherwise provided, a particle diameter may be an average particle diameter. The particle diameter indicates an average particle diameter (D50) where a cumulative volume is about 50 volume% in a particle size distribution. The average particle diameter (D50) may be measured by a method well known to those skilled in the art, for example, by a particle size analyzer, by a transmission electron microscopic image, or by a scanning electron microscopic image. In some example embodiments, a dynamic light-scattering measurement device is used to perform a data analysis, and the number of particles is counted for each particle size range, and the average particle diameter (D50) value may be readily obtained through a calculation based on the counted number of particles. The particle size may be measured by a laser diffraction method. The laser diffraction may be obtained by distributing particles to be measured in a distribution solvent and introducing the distribution solvent to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50 % standard of particle size distribution in the measuring device.

In some example embodiments, an average particle diameter may be measured by various techniques, and for example, may be measured by a particle size analyzer.

In some example embodiments, a thickness may be measured by a SEM or a TEM image for the cross-section, but is not limited thereto, and the thickness may be measured by any techniques, as long as the techniques may measure the thickness in the related arts. The thickness may be an average thickness.

As used herein, soft carbon refers to graphitizable carbon materials and are readily graphitized by heat treatment at a high temperature, e.g., about 2800 °C, and hard carbon refers to non-graphitizable carbon materials and are not substantially and slightly graphitized by heat treatment. The terms soft carbon and hard carbon may be well known in the related arts.

In some example embodiments, the crystalline carbon and the amorphous carbon may be distinguished through XRD measurement. The crystalline carbon includes natural graphite and artificial graphite. Natural graphite may indicate graphite which may be naturally generated by separating the graphite from minerals, and when measured by XRD, the interplanar spacing (d002) of the (002) plane may be in a range of about 3.350 Å to about 3.360 Å. Artificial graphite may indicate graphite manufactured by graphitization, and when (e.g., when) measured by XRD, the interplanar spacing (d002) of the (002) plane may be in a range of about 3.355 Å to about 3.365 Å. The amorphous carbon may have the interplanar spacing (d 002) of the (002) plane in a range of about 3.34 Å or less, when measured by XRD. The XRD may be measured using CuKα ray as a target line with an X-ray diffraction analyzer (e.g., product name: X'Pert, manufacturer: Malvern Panalytical) and by removing a monochromator to improve a peak intensity resolution. The measurement condition may be 2θ=10 ° to 80 °, a scan speed (°/S) of 0.044 to 0.089, and a step size (°/step) of 0.013 to 0.039.

In some example embodiments, a weight-average-molecular weight may be measured by using gel permeation chromatography (GPC).

A binder for a negative electrode of a rechargeable lithium battery is represented by Chemical Formula 1 below.

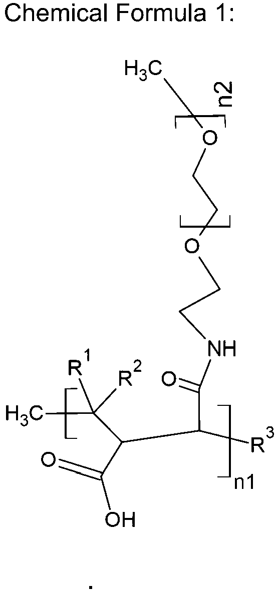

In Chemical Formula 1, R¹ and R² are the same or different, and are hydrogen; or a substituted or unsubstituted alkyl group,
R³ is or includes a substituted or unsubstituted alkyl group,
n1 is an integer in a range of about 50 to about 180, and
n2 is an integer in a range of about 5 to about 20.

In one or more example embodiments, the R¹ and R² are the same or different, and may be or include unsubstituted alkyl group. The alkyl group may be or include a C1 to C15 alkyl group, or a C3 to C15 alkyl group. The alkyl group may be or include a linear alkyl group or a branched alkyl group.

The R³ may be or include an unsubstituted alkyl group. The alkyl group may be or include a C1 to C5 alkyl group or a C3 to C5 alkyl group. The alkyl group may be or include the branched alkyl group.

According to one or more example embodiments, in the substituted alkyl group, the substituent may be or include a hydroxy group, a methyl group, a hydrogen, or an amine group.

In one or more example embodiments, n1 may be about 60 to about 100.

In one or more example embodiments, n2 may be at most equal to about 20, and when n2 is equal to more than 20, the binder may become entangled in the slurry for preparing the negative electrode, causing substantial increase in the viscosity of the slurry, and thus, phase separation may occur. Furthermore, the binder in which n2 exceeds 20 may exhibit deteriorated adhesion.

The binder according to one or more example embodiments exhibit desired or improved adhesion as the hydrogen bonding in the substituted alkyl group may occur, and thus, even when the volume of the negative electrode active material expands or contracts during charging and discharging, the adhesion between the active materials or the adhesion to the current collector may be maintained as desired. The binder according to one or more example embodiments may provide a desired or improved restoration force against the volume expansion of the negative electrode active material.

Thus, when the binder according to one or more example embodiments is utilized in the negative electrode including the Si-based active material exhibiting substantially higher capacity of approximately 4,200 mAh/g, but deteriorated cycle-life due to the volume expansion in a range of about 300 % to about 400 % during the repeated charging and discharging, the fading of the cycle-life characteristics due to the volume expansion of the Si-based active material may be effectively reduced or suppressed.

In one or more example embodiments, the binder may have a weight-average molecular weight (Mw) in a range of about 100,000 Dalton to about 1,000,000 Dalton, about 100,000 Dalton to about 800,000 Dalton, about 100,000 Dalton to about 600,000 Dalton, or about 100,000 Dalton to about 400,000 Dalton. In another embodiments, the binder may have a weight-average molecular weight (Mw) in a range of about 60,000 Dalton to about 90,000 Dalton, or about 6,000 Dalton to about 10,000 Dalton. When the weight-average molecular weight (Mw) of the binder satisfies the above range, the phase stability and the processability of the negative electrode active material layer slurry may be secured, and the solid content of the slurry may be adjusted (e.g., about 40 wt% to about 55 wt%), thereby improving adhesion. Furthermore, when the weight-average molecular weight (Mw) of the binder is within the above range, the degree of the surface contact between the active material and the binder increases, thereby ensuring desired or improved adhesion and phase stability.

In one or more example embodiments, the binder may have a glass transition temperature (Tg) in a range of about 70 °C to about 140 °C, about 80 °C to about 140 °C, or about 85 °C to about 140 °C. When the glass transition temperature (Tg) of the binder is included in the above range, desired or improved cycle-life characteristics may be achieved.

The negative electrode active material layer slurry including the binder according to one or more example embodiments may have an appropriate or desired viscosity in a range of about 1400 centipoise (cps) to about 3000 cps at room temperature (about 20 °C to about 25 °C).

The binder for the negative electrode according to one or more example embodiments may be synthesized by polymerizing a first monomer represented by Chemical Formula 2 and a second monomer represented by Chemical Formula 3.

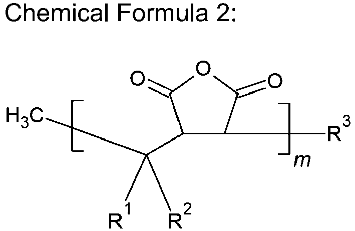

In Chemical Formula 2, R¹ and R² are the same or different, and are hydrogen or a substituted or unsubstituted alkyl group, R³ is or includes a substituted or unsubstituted alkyl group, and m is an integer in a range of about 1 to about 100.

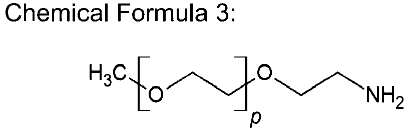

In Chemical Formula 3, p is an integer in a range of about 1 to about 100.

The polymerization may be carried out by mixing the first monomer of Chemical Formula 2 and the second monomer of Chemical Formula 3. In the mixing process, the NH₂ group in Chemical Formula 3 attacks carbonyl carbon of the acid anhydride in the first monomer of Chemical Formula 2 to cause a ring opening reaction, thereby causing a polymerization reaction.

A mixing ratio of the first monomer of Chemical Formula 2 and the second monomer of Chemical Formula 3 may be a mole ratio in a range of about 1:10 to about 1:100, a mole ratio in a range of about 1:20 to about 1:100, a mole ratio in a range of about 1:40 to about 1:100, a mole ratio in a range of about 1:60 to about 1:100, or a mole ratio in a range of about 1:80 to about 1:100. When the mixing ratio of the first monomer of Chemical Formula 2 and the second monomer of Chemical Formula 3 satisfies the above range, there may be advantages such as securing solubility as the aqueous negative electrode binder and enabling control of the glass transition temperature, which secure the physical properties of the electrode.

In one or more embodiments, the first monomer of Chemical Formula 2 may be synthesized by the general procedures. For example, the first monomer may be synthesized by polymerizing isobutylene and maleic anhydride in a solvent. The solvent may be dimethylform aldehyde, but is not limited thereto. Furthermore, the polymerization may be carried out at about 60°C for about 12 hours, but is not limited thereto, as it is well understood that the polymerization may be carried out at a temperature and a time that are sufficient for polymerization to occur.

### Negative electrode for rechargeable lithium battery:

The negative electrode according to the invention includes a negative electrode active material layer including a binder and a negative electrode active material. The binder may be or include the binder according to the invention.

In one or more example embodiments, an amount of the binder may be, based on the total weight of the negative electrode active material layer, in a range of about 1 wt% to about 5 wt%, or about 1 wt% to about 3 wt%. When the amount of the binder is within the above range, the negative electrode active materials may be sufficiently attached to each other, the negative electrode active material layer may be sufficiently adhered to the current collector, and the desired or improved restoration force against the volume expansion of the negative electrode active material may be provided.

The negative electrode active material may be or include a Si-based negative electrode active material. The Si-based negative electrode active material has high capacity, but presents the challenge of severe expansion and shrinkage of volume during charging and discharging, and these shortcomings may be effectively reduced or removed by using the Si-based negative electrode active material together with the binder according to one or more example embodiments. Accordingly, the negative electrode according to one or more example embodiments may satisfy both high-capacity owing to the utilization of the Si-based negative electrode active material, and desired or improved cycle-life characteristics owing to the binder according to one or more example embodiments.

The Si-based negative electrode active material may be or include at least one of silicon, a Si-C composite, SiOₓ (0 <x≤2), a Si-Q alloy (wherein Q is an element such as or including at least one of an alkali metal, an alkaline-earth metal, a Group 13 element, a Group 14 element (except for Si) a Group 15 element, a Group 16 element, a transition metal, a rare earth element, and a combination thereof), or a combination thereof.

The Si-based negative electrode active material may be or include the silicon-carbon composite.

The silicon-carbon composite may be or include a composite of silicon and amorphous carbon. According to one or more example embodiments, the silicon-carbon composite may include silicon particles, and an amorphous carbon coated on the surface of the silicon particle. For example, the silicon-carbon composite may include a secondary particle (core) in which silicon primary particles are agglomerated, and an amorphous carbon coating layer (shell) positioned on the secondary particle. The amorphous carbon may also be positioned between the silicon primary particles, for example, to coat the silicon primary particles. The secondary particle may be distributed in an amorphous carbon matrix.

Furthermore, the silicon-carbon composite may include silicon particles, and an amorphous carbon coating layer on the surface of the silicon particles.

The secondary particle is positioned at the center of the Si-C composite, so the secondary particle may be referred to as a core or a center part. The amorphous carbon coating layer may be referred to as an outer part or a shell.

The silicon particle may be or include nano silicon particles. The nano silicon particle may have an average particle diameter in a range of about 10 nm to about 1000 nm, and according to one or more example embodiments, the average particle diameter may be in a range of about 20 nm to about 900 nm, about 20 nm to about 800 nm, about 20 nm to about 500 nm, about 20 nm to about 300 nm, or about 20 nm to about 150 nm. When the average particle diameter of the silicon particles is within the above range, the substantial volume expansion typically caused during charge and discharge may be reduced or suppressed, and breakage of the conductive path due to crushing of particle during charging and discharging may be reduced or prevented.

A mixing ratio of the nano silicon and the amorphous carbon may be in a range of about 20:80 to about 70:30 by weight ratio.

In one or more example embodiments, the silicon-carbon composite may further include crystalline carbon. In some example embodiments, the silicon-carbon composite may include a core including crystalline carbon and silicon particles, and an amorphous carbon coating layer on a surface of the core.

When the silicon-carbon composite includes the silicon particles, the crystalline carbon, and the amorphous carbon, an amount of the amorphous carbon may be in a range of about 10 wt% to about 70 wt% based on the total 100 wt% of the silicon-carbon composite, and an amount of the crystalline carbon may be in a range of about 10 wt% to about 70 wt% based on the total 100 wt% of the silicon-carbon composite. An amount of the silicon particle may be, based on the total 100 wt% of the silicon-carbon composite, in a range of about 20 wt% to about 69 wt%, and according to one or more example embodiments, may be in a range of about 30 wt% to about 60 wt%.

The particle diameter of the silicon-carbon composite may be adjusted as desired, and is not limited thereto.

When the amorphous carbon is surrounding the surface of the secondary particles, the thickness thereof may be adjusted as desired, but may exist, for example, at a thickness in a range of about 5 nm to about 100 nm.

The negative electrode active material layer according to one or more example embodiments may further include an aqueous binder.

The aqueous binder may include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

The aqueous binder may be or include a cellulose compound, or may be or include the cellulose compound together with the aforementioned aqueous binder. The cellulose compound may be referred to as a thickener, since the cellulose compound may impart viscosity, or may be configured as a binder and thus, may be referred to as a binder. The cellulose compound may be included in an appropriate or desired amount within the amount of the aqueous binder, and is not limited thereto. The cellulose-based compound includes one or more of carboxymethyl cellulose, hydroxypropylmethyl cellulose, methyl cellulose, or alkali metal salts thereof. The alkali metal may be or include at least one of Na, K, or Li.

When the negative electrode active material layer further includes the aqueous binder, a mixing ratio of the binder according to one or more example embodiments and the aqueous binder may be a weight ratio in a range of about 1:1.6 to about 1:2.75, a weight ratio in a range of about 1:1.8 to about 1:2.5, a weight ratio in a range of about 1:1.88 to about 1:2.5 weight ratio, or a weight ratio in a range of about 1:2 to about 1:2.5.

Even when the negative electrode active material layer includes both binder according to one or more example embodiments and the aqueous binder, a total amount of the binder may be in a range of about 1 wt% to about 5 wt% based on the total weight of the negative electrode active material layer.

In one or more example embodiments, the negative electrode active material layer may further include a conductive material.

For example, the negative electrode active material layer may include the negative electrode active material in a range of about 95 wt% to about 99 wt% and the binder in a range of about 1 wt% to about 5 wt%, and in other example embodiments, the negative electrode active material layer may include the negative electrode active material in a range of about 91.5 wt% to about 99 wt%, the binder in a range of about 1 wt% to about 5 wt%, and the conductive material in a range of about 0.5 wt% to about 5 wt%. The binder may be or include the binder according to one or more example embodiments, or a mixture of the binder according to one or more example embodiments and an aqueous binder.

The conductive material is included to provide electrode conductivity, and any electrically conductive material may be included as a conductive material unless the electrically conductive material causes a chemical change in the battery. Examples of the conductive material may be or include a carbon-based material such as at least one of natural graphite, artificial graphite, carbon black, acetylene black, Ketjen black, a carbon fiber, a carbon nanofiber, carbon nanotube, or the like; a metal-based material of a metal powder or a metal fiber including at least one of copper, nickel, aluminum, silver, and the like; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, and a combination thereof.

### Rechargeable lithium battery:

The present invention is further directed to a rechargeable lithium battery including the negative electrode and/or the binder, a positive electrode, and a non-aqueous electrolyte.

In the rechargeable lithium battery, the negative electrode may show a peak appearing at a wavelength in a range of about 1713 cm⁻¹ to about 1605 cm⁻¹ when measured by FT-IR. In one embodiment, the negative electrode may show two peaks of a peal related to a carbonyl group and a peak related to an amide group appearing at a wavelength in a range of about 1713 cm⁻¹ to about 1605 cm⁻¹ when measured by FT-IR. The appearance of the peaks in the measurement of FT-IR measurement indicates that the binder according to one or more example embodiments, e.g., the binder in which the first monomer of Chemical Formula 2 and the second monomer of Chemical Formula 3 are polymerized, may be included in the negative electrode. When the first monomer of Chemical Formula 2 and the second monomer of Chemical Formula 3 are not polymerized and exist in a mixture thereof (e.g., they separately exist) in the negative electrode, no peak appears at the wavelength. When the first monomer of Chemical Formula 2 and the second monomer of Chemical Formula 3 exist in the form of the mixture in the negative electrode, a peak appearing at a wavelength in a range of about 1713 cm⁻¹ to about 1605 cm⁻¹ does not shown.

### Positive electrode

The positive electrode may include a current collector and a positive electrode active material layer on the current collector. The positive electrode active material layer includes a positive electrode active material, and may further include a binder and/or a conductive material.

For example, the positive electrode may further include an additive that may be configured as a sacrificial positive electrode.

An amount of the positive electrode active material may be in a range of about 90 wt% to about 99.5 wt% based on 100 wt% of the positive electrode active material layer, and amounts of the binder and the conductive material may be respectively in a range of 0.5 wt% to 5 wt% based on 100 wt% of the positive electrode active material layer.

The positive electrode active material may include a compound (lithiated intercalation compound) that is capable of reversibly intercalating and deintercalating lithium. In some example embodiments, at least one of a composite oxide of lithium and a metal such as or including at least one of cobalt, manganese, nickel, or combinations thereof may be included.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free lithium nickel-manganese-based oxide, or a combination thereof.

For example, the following compounds represented by any one of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may be or include a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may achieve high capacity, and may be applied to a high-capacity, high-density rechargeable lithium battery.

The binder improves binding properties of positive electrode active material particles with one another and with a current collector. Examples of the binder may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, or the like, but are not limited thereto.

The conductive material is included to provide electrode conductivity, and any suitable electrically conductive material may be included as an electrically conductive material unless the electrically conductive material causes an adverse chemical change in the battery. Examples of the conductive material may include a carbon-based material such as at least one of natural graphite, artificial graphite, carbon black, acetylene black, Ketjen black, carbon fiber, carbon nanofiber, carbon nanotube, or the like; a metal-based material of a metal powder or a metal fiber including at least one of copper, nickel, aluminum, silver, or the like; a conductive polymer such as a polyphenylene derivative; or a mixture thereof.

The current collector may include Al, but is not limited thereto.

### Electrolyte:

The electrolyte for a rechargeable lithium battery is a non-aqueous electrolyte, which includes a non-aqueous organic solvent and a lithium salt.

The non-aqueous organic solvent is configured as a medium that transmits ions taking part in the electrochemical reaction of a battery.

The non-aqueous organic solvent may include at least one of a carbonate-based, ester-based, ether-based, ketone-based, alcohol-based, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include at least one of methyl acetate, ethyl acetate, n-propyl acetate, dimethyl acetate, methyl propionate, ethyl propionate, decanolide, γ-butyrolactone, mevalonolactone, valerolactone, caprolactone, or the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. The ketone-based solvent may include cyclohexanone, or the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The organic solvent may be included alone or in a mixture of two or more solvents.

When the carbonate-based solvent is included, the cyclic carbonate and the linear carbonate may be included together therewith, and the cyclic carbonate and the linear carbonate may be mixed at a volume ratio in a range of about 1:1 to about 1:9.

The electrolyte may further include at least one of vinylethyl carbonate, vinylene carbonate, difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof, as an additive.

The lithium salt dissolved in an organic solvent is configured to supply a battery with lithium ions, to operate the rechargeable lithium battery, and to improve transportation of the lithium ions between positive and negative electrodes. Examples of the lithium salt include one or at least two supporting electrolyte salt such as or including LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer in a range of about 1 to about 20, lithium trifluoromethane sulfonate, lithium tetrafluoroethane sulfonate, lithium difluorobis(oxalato)phosphate (LiDFOP), and lithium bis(oxalato) borate (LiBOB).

### Separator:

A separator may be between the positive electrode and the negative electrode depending on a type (or kind) of rechargeable lithium battery. The separator may include at least one of polyethylene, polypropylene, polyvinylidene fluoride or multi-layers thereof having two or more layers, and may be a mixed together multilayer such as a polyethylene/polypropylene double-layered separator, a polyethylene/polypropylene/polyethylene triple-layered separator, a polypropylene/polyethylene/polypropylene triple-layered separator, and the like.

The separator may include a porous substrate and a coating layer including an organic material, an inorganic material, or a combination thereof, on one surface, or both surfaces, (e.g., one or two opposing surfaces) of the porous substrate.

The porous substrate may be or include a film formed of or including any one polymer such as or including at least one of polyolefin such as polyethylene, polypropylene, or the like, polyester such as polyethylene terephthalate, polybutylene terephthalate, or the like, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acryl-based polymer.

The inorganic material may be or include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and an inorganic material may be mixed in one coating layer, or a coating layer in which an organic material and a coating layer including an inorganic material may be stacked together.

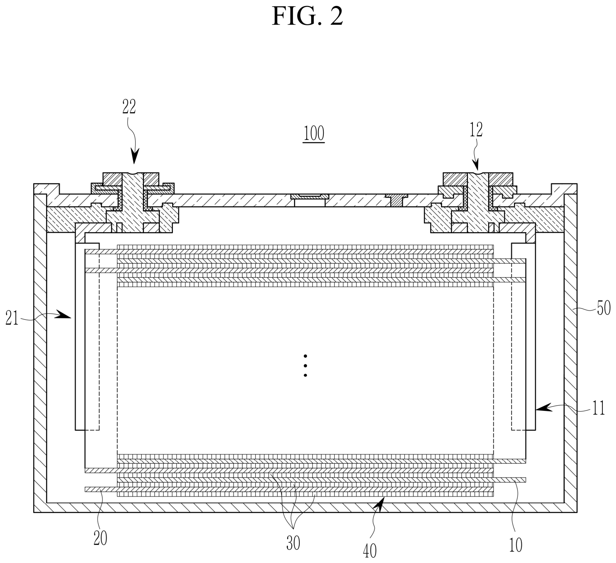

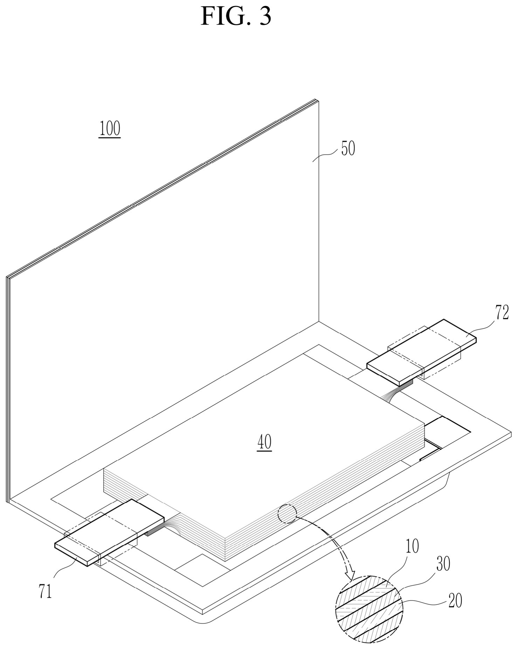

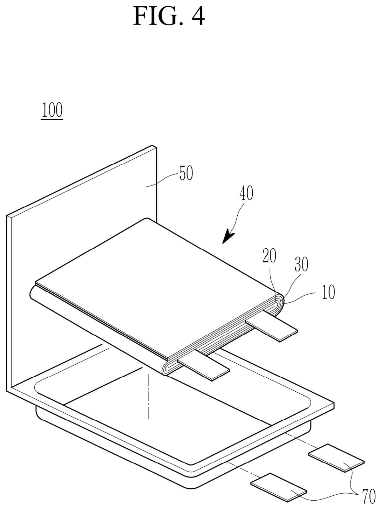

The rechargeable lithium battery may be classified into cylindrical, prismatic, pouch, or coin-type batteries, and the like depending on their shape. FIG. 1 to FIG. 4 are schematic views illustrating a rechargeable lithium battery according to an example embodiment, and FIG. 1 shows a cylindrical battery, FIG. 2 shows a prismatic battery, and FIG. 3 and FIG. 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 that seals the case 50, as shown in FIG. 4. In FIG. 2, the rechargeable lithium battery 100 may include a positive electrode lead tab 11 and a positive terminal 12 connected to the positive electrode lead tab 11, a negative electrode lead tab 21, and a negative terminal 22 connected to the negative electrode lead tab 21. As shown in FIG. 4, the rechargeable lithium battery 100 may include an electrode tab 70, which may form an electrical path for inducing the current formed in the electrode assembly 40 to the outside of the battery 100, or a positive electrode tab 71 and a negative electrode tab 72, as shown in FIG. 3.

The rechargeable lithium battery according to an example embodiment may be applicable to, e.g., automobiles, mobile phones, and/or various suitable types (or kinds) of electric devices, as non-limiting examples.

The following Examples and Comparative Examples are provided in order to highlight characteristics of one or more example embodiments, but it is understood that the Examples and Comparative Examples are not to be construed as limiting the scope of the example embodiments, nor are the Comparative Examples to be construed as being outside the scope of the example embodiments. Further, it is understood that the example embodiments are not limited to the particular details described in the Examples and Comparative Example.

### Example 1:

A first monomer of Chemical Formula 2a and the second monomer of Chemical Formula 3 were mixed at a mole ratio of 1:10 to prepare a polymer binder of Chemical Formula 1a (weight-average molecular weight: 120 k Dalton, glass transition temperature: 134 °C). 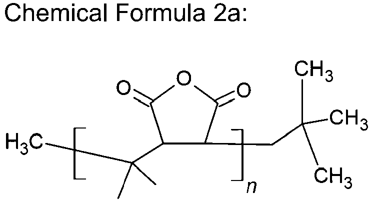
wherein n was equal to 50; 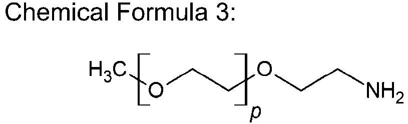
wherein p was equal to 10; 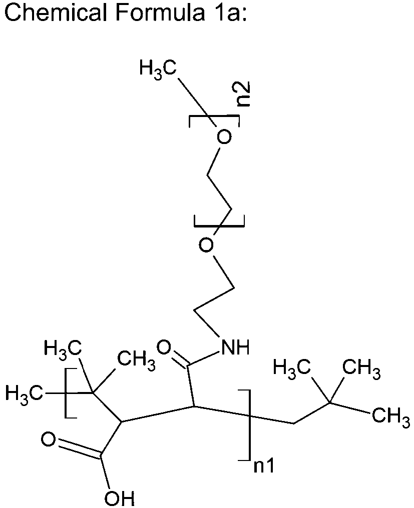
wherein n1 was equal to 50 and n2 was equal to 10.

A silicon-carbon composite negative electrode active material of 94 wt%, the binder of 3 wt%, a carbon black conductive material of 3 wt% were mixed in a water solvent to prepare a negative electrode active material layer slurry (solid content: 48 wt% and viscosity (at 25 °C): 1500 cps).

The negative electrode active material layer slurry was coated on a copper current collector and dried followed by pressurizing, thereby preparing a negative electrode.

A LiNi_{0.8}Co_{0.1}Mn_{0.1}O₂ positive electrode active material of 96 wt%, Ketjen black of 2 wt%, and polyvinylidene fluoride of 2 wt% were mixed in an N-methyl pyrrolidone solvent to prepare a positive electrode active material layer slurry. The positive electrode active material layer slurry was coated on an Al foil current collector and dried followed by pressurizing, thereby preparing a positive electrode.

The negative electrode, the positive electrode, and an electrolyte were used to fabricate a full cell. As the electrolyte, a 1.15M LiPF₆ dissolved in ethylene carbonate, ethylmethyl carbonate, and dimethyl carbonate (3:5:2 by volume ratio) was used.

### Example 2:

A polymer binder (weight average-molecular weight: 150 K Dalton and glass transition temperature: 128 °C) in which n1 was equal to 80 and n2 was equal to 10 in Chemical Formula 1a was prepared by the same procedure as in Example 1, with a difference that the first monomer of Chemical Formula 2a and the second monomer of Chemical Formula 3 were mixed at a mole ratio of 1:40.

A negative electrode active material layer slurry (solid content: 48 wt% and viscosity (at 25 °C): 1480 cps) and full cell were fabricated by the same procedure as in Example 1 using the binder.

### (Example 3)

A polymer binder (weight average-molecular weight: 200 K Dalton and glass transition temperature: 110 °C) in which n1 was equal to 160 and n2 was equal to 10 in Chemical Formula 1a was prepared by the same procedure as in Example 1, with a difference that the first monomer of Chemical Formula 2a and the second monomer of Chemical Formula 3 were mixed at a mole ratio of 1:80.

A negative electrode active material layer slurry (solid content: 48 wt% and viscosity (at 25 °C): 1450 cps) and full cell were fabricated by the same procedure as in Example 1 using the binder.

### Example 4:

A polymer binder (weight average-molecular weight: 220 K Dalton and glass transition temperature: 88 °C) in which n1 was equal to 180 and n2 was equal to 10 in Chemical Formula 1a was prepared by the same procedure as in Example 1, with a difference that the first monomer of Chemical Formula 2a and the second monomer of Chemical Formula 3 were mixed at a mole ratio of 1:100.

A negative electrode active material layer slurry (solid content: 48 wt% and viscosity (at 25 °C): 1530 cps) and full cell were fabricated by the same procedure as in Example 1 using the binder.

### Comparative Example 1:

A polymer binder (weight average-molecular weight: 160 K Dalton and glass transition temperature: 150 °C) in which n1 was equal to 150 and n2 was equal to 0 in Chemical Formula 1a was prepared by the same procedure as in Example 1, with a difference that the first monomer of Chemical Formula 2a and the second monomer of Chemical Formula 3 were mixed at a mole ratio of 1:0.

A negative electrode active material layer slurry (solid content: 48 wt% and viscosity (at 25 °C): 1500 cps) and full cell were fabricated by the same procedure as in Example 1 using the binder.

### Experimental Example 1) Evaluation of adhesion

The adhesion of the negative electrodes according to Examples 1 to 4 and Comparative Example 1 was measured by the following techniques.

A tape attached to a slide glass was attached to the negative electrode active material layer, and then the tape was peeled from the negative active material layer using a 180° UTM tensile strength tester to measure the adhesion. The speed for detaching was set to 10 mm/min, the measurements were taken three times to obtain the average of the force required to peel 40 mm after starting peeling. The results are shown in Table 1 below.

### Experimental Example 2) Evaluation of separation rate of negative electrode when fully charged

The cells according to Examples 1 to 4 and Comparative Example 1 were fully charged at 0.7 C, and then the negative electrode was separated. The separation rate of the negative electrode was measured by calculating an area of the full-charged electrode active mass relative to area of the initial negative electrode. The results are shown in Table 1 below.

### Experimental Example 3) Evaluation of DC internal resistance (DC-IR: Direct current internal resistance)

The full cells according to Examples 1 to 4 and Comparative Example 1 were once charged and discharged under a charging at 0.2 C and a discharging at 0.2 C at 25 °C, and a voltage drop (V) was measured, while a current flew at 1 C for 1 second under a SOC50 (charged to be 50 % of charge capacity based on 100 % of entire battery charge capacity, which is 50 % discharged in a discharge state). From the results of the voltage drop measurement, DC internal resistance (DC-IR) was calculated. The results are shown in Table 1 below.

### Experimental Example 4) Evaluation of capacity retention

The full cells according to Examples 1 to 4 and Comparative Example 1 were charged and discharged at 0.3 C for 100 cycles. A ratio of a 100^{th} discharged capacity relative to a 1st discharge capacity was measured. The results are shown in Table 1 below as capacity retention.

**Table 1:**

| | Glass transition temperature (Tg, °C) | Negative electrode adhesion (gf/mm) | Separation rate of fully-charged negative electrode (%) | DC-IR (mΩ) | Capacity retention (%) |
|---|---|---|---|---|---|
| Comparative Example 1 | 150 | 1.04 | 14 | 91.6 | 86 |
| Example 1 | 134 | 1.11 | 5 | 90.5 | 88 |
| Example 2 | 128 | 1.20 | 0 | 89.6 | 90 |
| Example 3 | 110 | 1.28 | 0 | 88.4 | 91.2 |
| Example 4 | 88 | 1.24 | 0 | 88.3 | 91.6 |

As shown in Table 1 above, the cells using the binder of Examples 1 to 4 exhibited desired or improved negative electrode adhesion, and substantially low separation rate of the negative electrode even though fully charged, or no separation. Furthermore, the cells of Examples 1 to 4 exhibited low resistance and high capacity retention.

Whereas, the cell of Comparative Example 1 exhibited low negative electrode adhesion, high separation rate of the negative electrode, high resistance, and low capacity retention.

### Example 5

A polymer binder (weight average-molecular weight: 300 K Dalton and glass transition temperature: 100 °C) in which n1 was equal to 50 and n2 was equal to 8 in Chemical Formula 1a was prepared by the same procedure as in Example 1, with a difference that a second monomer of Chemical Formula 3 in which p was equal to 8, was used.

A negative electrode active material layer slurry (solid content: 48.3 wt% and viscosity (at 25 °C): 2432 cps), and full cell were fabricated by the same procedure as in Example 1 using the binder.

### Example 6:

A polymer binder (weight average-molecular weight: 340 K Dalton and glass transition temperature: 120 °C) in which n1 was equal to 50 and n2 was equal to 12 in Chemical Formula 1a was prepared by the same procedure as in Example 1, with a difference that a second monomer of Chemical Formula 3 in which p was equal to 12, was used.

A negative electrode active material layer slurry (solid content: 48.1 wt% and viscosity (at 25 °C): 2579 cps), and full cell were fabricated by the same procedure as in Example 1 using the binder.

### Example 7;

A polymer binder (weight average-molecular weight: 330 K Dalton and glass transition temperature: 110 °C) in which n1 was equal to 50 and n2 was equal to 20 in Chemical Formula 1a was prepared by the same procedure as in Example 1, with a difference that a second monomer of Chemical Formula 3 in which p was equal to 20, was used.

A negative electrode active material layer slurry (solid content: 48.3 wt% and viscosity (at 25 °C): 2531 cps), and full cell were fabricated by the same procedure as in Example 1 using the binder.

### Comparative Example 2:

A polymer binder (weight average-molecular weight: 600 K Dalton and glass transition temperature: 150 °C) in which n1 was equal to 125 and n2 was equal to 10 in Chemical Formula 10 was prepared by the same procedure as in Example 1, with a difference that a first monomer of Chemical Formula 5 (wherein R was methyl and n was 125) was used instead of the first monomer of Chemical Formula 2a.

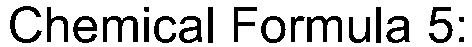

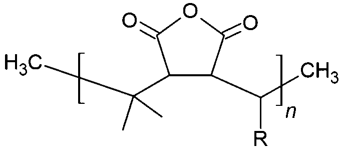

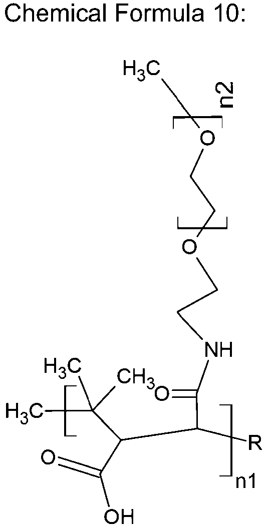

A negative electrode active material layer slurry (solid content: 48.3 wt% and viscosity (at 25 °C): 2432 cps), and full cell were fabricated by the same procedure as in Example 1 using the binder.

### Experimental Example 6) Viscosity change rate

The negative electrode active material layer slurries of Examples 5 to 7 and Comparative Example 2 were allowed to stand at room temperature (25 °C) for one day, and then viscosity change rate was measured. The results are shown in Table 2 below.

After allowing to stand for 1 day, the phase separation was observed.

The results are shown in Table 2 below.

**Table 2**

| | Viscosity change rate (%) | Phase separation |
|---|---|---|
| Example 5 | 1 | X |
| Example 6 | 4 | X |
| Example 7 | 3 | X |
| Comparative Example 2 | 2.5 | O |

As shown in Table 2, the binder of Examples 5 to 7 had almost no viscosity change rate and no phase separation, while the binder of Comparative Example 2 had a large viscosity change rate and occurrence of phase separation.

While this disclosure has been described in connection with what is presently considered to be practical example embodiments, it is to be understood that the disclosure is not limited to the disclosed embodiments, but, on the contrary, is intended to cover various modifications and equivalent arrangements included within the spirit and scope of the appended claims.

## Claims

1. A binder for a negative electrode of a rechargeable lithium battery, the binder being represented by Chemical Formula 1: 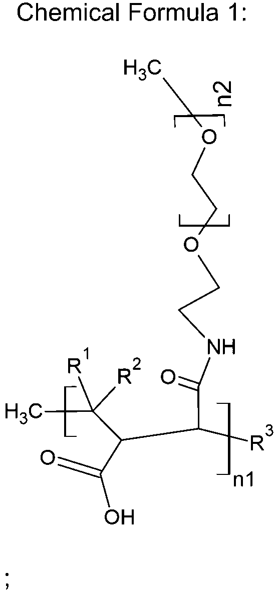
wherein R¹ and R² are the same or different, and are hydrogen or a substituted or unsubstituted alkyl group,
R³ comprises a substituted or unsubstituted alkyl group,
n1 is an integer in a range of 50 to 180,
n2 is an integer in a range of 5 to 20.

2. The binder for a negative electrode of a rechargeable lithium battery of claim 1, wherein R¹ and R² are the same or different, and are an unsubstituted alkyl group.

3. The binder for a negative electrode of a rechargeable lithium battery of claim 2, wherein the alkyl group comprises a C1 to C15 alkyl group.

4. The binder for a negative electrode of a rechargeable lithium battery of any of claims 1-3, wherein R³ comprises a substituted or unsubstituted C1 to C5 alkyl group.

5. The binder for a negative electrode of a rechargeable lithium battery of any of claims 1-4, wherein the binder has a weight-average molecular weight (Mw) in a range of 100,000 Dalton to 1,000,000 Dalton.

6. The binder for a negative electrode of a rechargeable lithium battery of any of claims 1-5, wherein the binder has a glass transition temperature (Tg) in a range of 70 °C to 140 °C.

7. A negative electrode for a rechargeable lithium battery, the negative electrode comprising:
a negative electrode active material layer comprising the binder of any one of claim 1 to claim 6 and a negative electrode active material.

8. The negative electrode for a rechargeable lithium battery of claim 7, wherein an amount of the binder is in a range of 1 wt% to 5 wt% based on the total weight of the negative electrode active material layer.

9. The negative electrode for a rechargeable lithium battery of claim 7 or 8, wherein the negative electrode active material comprises a Si-based negative electrode active material.

10. The negative electrode for a rechargeable lithium battery of claim 9, wherein the Si-based negative electrode active material comprises a silicon-carbon composite.

11. The negative electrode for a rechargeable lithium battery of any of claims 7-10, wherein the negative electrode active material layer further comprises an aqueous binder.

12. The negative electrode for a rechargeable lithium battery of claim 11, wherein a mixing of the binder and the aqueous binder has a weight ratio in a range of 1:1.6 to 1:2.75 weight ratio.

13. A rechargeable lithium battery, comprising:
a negative electrode comprising the binder of any one of claim 1 to claim 6 and a negative electrode active material;
a positive electrode; and
a non-aqueous electrolyte.

14. The rechargeable lithium battery of claim 13, wherein the negative electrode has a peak appearing at a wavelength in a range of 1770 cm⁻¹ to 1840 cm⁻¹ and a peak appearing at a wavelength in a range of 914 cm⁻¹ to 1074 cm⁻¹ when measured by FT-IR.

15. The rechargeable lithium battery of claim 13 or 14, wherein the negative electrode is a negative electrode according to any one of claims 7 to claim 12.
